# EUROPÄISCHE PATENTSCHRIFT

(11) **EP 3 578 031 B1**
(45) Veröffentlichungstag und Bekanntmachung des Hinweises auf die Patenterteilung: **02.10.2024**
(21) Anmeldenummer: 19167564.4
(22) Anmeldetag: 05.04.2019
(51) Int. Cl.: A01D 41/127, A01B 79/00

(54) **LANDWIRTSCHAFTLICHES ARBEITSSYSTEM**
AGRICULTURAL SYSTEM
SYSTÈME DE TRAVAIL AGRICOLE

(30) Priorität: 08.06.2018 DE 102018113742
(43) Veröffentlichungstag der Anmeldung: 11.12.2019
(73) Patentinhaber: CLAAS Selbstfahrende Erntemaschinen GmbH, 33428 Harsewinkel (DE)
(72) Erfinder: Buda, Andreas, 33330 Gütersloh (DE); Uhlmann, Patrick, 33775 Versmold (DE); Barkey, Christian, 33330 Gütersloh (DE)
(74) Vertreter: CLAAS Gruppe

(56) Entgegenhaltungen:
- DE-A1- 102014 201 203
- US-A1- 2014 303 814
- US-A1- 2017 127 606
- US-B2- 9 776 717

## Beschreibung

Die Erfindung betrifft ein landwirtschaftliches Arbeitssystem gemäß dem Oberbegriff von Anspruch 1 sowie ein Verfahren zum Betrieb eines landwirtschaftlichen Arbeitssystems gemäß dem Oberbegriff von Anspruch 10.

Das in Rede stehende landwirtschaftliche Arbeitssystem weist eine landwirtschaftliche Arbeitsmaschine und eine Drohne auf. Die landwirtschaftliche Arbeitsmaschine ist zum Beispiel eine Erntemaschine, wie ein Mähdrescher oder ein Feldhäcksler, oder ein Traktor und dient ganz allgemein zur Bewirtschaftung einer landwirtschaftlichen Fläche, zum Beispiel eines Kornfeldes. Die Drohne ist ein unbemanntes Fluggerät wie ein Quadro- oder Oktocopter und unterstützt die landwirtschaftliche Arbeitsmaschine bei der Bewirtschaftung.

Das landwirtschaftliche Arbeitssystem mit Drohne und landwirtschaftlicher Arbeitsmaschine (DE 10 2014 201 203 A1), von dem die Erfindung ausgeht, weist zur Übertragung von elektrischer Energie von der Arbeitsmaschine zu der Drohne eine Kabelverbindung oder eine Ladestation auf. Die Ladestation hält hierbei eine Ersatzbatterie vor. Neigt sich die Batterieladung der Drohne dem Ende zu, muss diese also auf der landwirtschaftlichen Arbeitsmaschine landen und die Batterie getauscht werden. Da die Drohne nur im Flug in einer gewissen Höhe die gewünschten Sensordaten sammelt, stehen diese während des Batteriewechselvorgangs nicht zur Verfügung. Bei der Übertragung von Energie über ein Kabel besteht dieses Problem nicht, allerdings wird dadurch die Reichweite der Drohne auf die Länge des Kabels begrenzt und der konstruktive Aufwand erhöht.

Es ist aus dem Stand der Technik (US 9,382,003 B2) auch bekannt, eine Drohne, die selbst landwirtschaftliche Arbeitsschritte durchführt, im Flug über einen Laser-Strahl zu laden. Der Laser-Strahl wird hierbei von einer fest installierten Ladestation auf dem Boden ausgesandt. Diese Drohne ist daher nur auf Feldern nutzbar, die mit derartigen Ladestationen ausgestattet sind. Weiterhin ist die Reichweite auf einen Umkreis um die Ladestation begrenzt.

Es ist aus dem Stand der Technik (US 9,776,717 B2) auch bekannt eine Batterie kabellos mittels Mikrowellen oder Laser aufzuladen. Die Batterie wird dabei an einer Ladestation von einem Ladesystem geladen.

Es ist aus dem Stand der Technik (US 2017/0127606 A1) auch bekannt aus Messdaten einer Drone eine Karte zu erstellen.

Der Erfindung liegt das Problem zu Grunde, das bekannte landwirtschaftliche Arbeitssystem derart auszugestalten und weiterzubilden, dass die Energieversorgung einer mit einer landwirtschaftlichen Arbeitsmaschine kooperierenden Drohne verbessert wird.

Das obige Problem wird bei einem landwirtschaftlichen Arbeitssystem gemäß dem Oberbegriff von Anspruch 1 durch die Merkmale des kennzeichnenden Teils von Anspruch 1 gelöst.

Der vorschlagsgemäßen Lösung liegt zunächst die grundsätzliche Überlegung zugrunde, auf einer landwirtschaftlichen Arbeitsmaschine eine Ladestation zum Aufladen einer Batterie einer Drohne vorzusehen, die ganz allgemein Energie über einen Laser-Strahl abgeben kann. Diese Energie kann dann im Flug von der Drohne aufgenommen werden. Dadurch wird ein kabelloses Auflademanagement einer Drohne frei von ortsfester Infrastruktur ermöglicht. Dies ermöglicht es auch, die Batterie der Drohne kleiner als bisher auszuführen, wodurch die Drohne leichter wird und sich wiederum ihre Einsatzzeit verlängert, und/oder die Anzahl mitgeführter Sensoren zu erhöhen.

Im Einzelnen wird vorgeschlagen, dass die Ladestation einen Laser-Emitter, der Energie über einen Laser-Strahl in einen Wirkbereich abgeben kann, aufweist, dass die Drohne einen mit der Batterie elektrisch gekoppelten Laser-Receiver, der Energie von dem Laser-Strahl aufnehmen und in die Batterie einspeisen kann, aufweist und dass die Drohne im Flug im Wirkbereich über den Laser-Strahl von der Ladestation mit Energie zum Laden der Batterie versorgt werden kann.

Eine Steuereinrichtung des landwirtschaftlichen Arbeitssystems weist mindestens eine Steuereinheit auf, wobei eine Arbeitsmaschinen-Steuereinheit der landwirtschaftlichen Arbeitsmaschine und eine Drohnen-Steuereinheit der Drohne zugeordnet ist. Die Steuereinrichtung beziehungsweise die Arbeitsmaschinen-Steuereinheit und/oder die Drohnen-Steuereinheit führt dann Ladesequenzen gemäß dem Anspruch 1 durch. Die Steuereinrichtung beziehungsweise die Arbeitsmaschinen-Steuereinheit und / oder die Drohnen-Steuereinheit kann eine Ladesequenz gemäß dem Anspruch 2 durchführen. In diesen Ladesequenzen wird die Drohne und/oder die landwirtschaftliche Arbeitsmaschine so gesteuert, dass die Batterie der Drohne geladen wird. Dieses Laden geschieht vorzugsweise abhängig vom Ladezustand der Batterie und/oder der Entfernung der Drohne zur landwirtschaftlichen Arbeitsmaschine. So wird ein problemloser Einsatz der Drohne innerhalb und/oder außerhalb eines Wirkbereichs der Ladestation, und somit auch während eines Ladevorgangs, ermöglicht.

Dadurch, dass gemäß Anspruch 3 Arbeitsschritte mindestens einer Ladesequenz durchgeführt werden können, während sich die Drohne im Flug befindet, während die landwirtschaftliche Arbeitsmaschine eine Fahrbewegung ausführt, oder während die Arbeitsmaschine eine landwirtschaftliche Fläche bewirtschaftet, vorzugsweise aber gerade während all dies zutrifft, kann die Drohne die Bewirtschaftung optimal unterstützen, ohne die landwirtschaftliche Arbeitsmaschine einzuschränken.

Die Ausgestaltungen der Ansprüche 4 und 5 beziehen sich auf ein Sensormodul und auf mindestens einen Sensor, die als Bestandteil der Drohne vorgesehen sein können. Da die Drohne mittels des Sensormoduls im Flug eine Messaufgabe durchführen kann, kann sie so die landwirtschaftliche Arbeitsmaschine mit Messdaten gemäß der Ansprüche 68 und 97 versorgen. Die Messdaten beziehen sich dabei vorzugsweise auf eine Erstellung einer Feldkarte der landwirtschaftlichen Fläche und/oder auf Sicherheitsaspekte während der Bewirtschaftung.

Gemäß einer Ausgestaltung nach Anspruch 8 weist die Steuereinrichtung eine Auswerteeinheit auf. Die Messdaten können damit verwendet werden, nachfolgende Arbeitsschritte der Bewirtschaftung zu planen und/oder durchzuführen. Gerade wenn, wie bei der Ausgestaltung gemäß Anspruch 944, eine Ladesequenz und eine Messaufgabe der Drohne gleichzeitig durchgeführt werden können, ist eine hohe Flexibilität gegeben. Es kann somit insgesamt ermöglicht werden, das landwirtschaftliche Arbeitssystem zur Bewirtschaftung einer landwirtschaftlichen Fläche zu nutzen, ohne zwischenzeitlich auf die Unterstützung durch die Drohne verzichten zu müssen.

Nach einer weiteren Lehre gemäß Anspruch 10, der eigenständige Bedeutung zukommt, wird ein Verfahren zum Betrieb des vorschlagsgemäßen landwirtschaftlichen Arbeitssystems beansprucht. Auf alle Ausführungen zu dem vorschlagsgemäßen landwirtschaftlichen Arbeitssystem darf verwiesen werden.

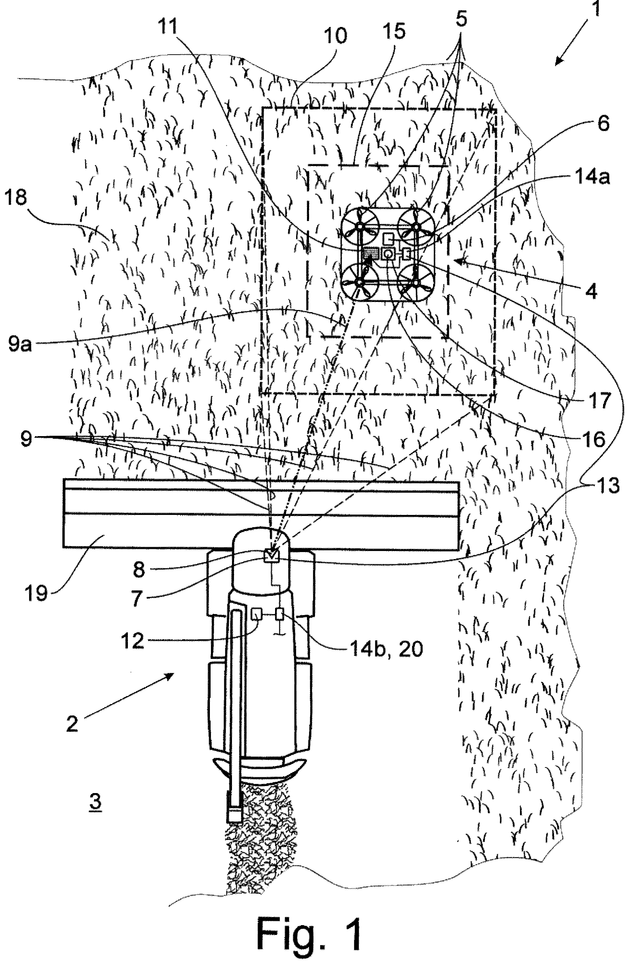

Im Folgenden wird die Erfindung anhand einer lediglich ein Ausführungsbeispiel darstellenden Zeichnung näher erläutert. In der Zeichnung zeigt
- Fig. 1: ein vorschlagsgemäßes landwirtschaftliches Arbeitssystem bei der Bewirtschaftung einer landwirtschaftlichen Fläche.

Das in Fig. 1 dargestellte landwirtschaftliche Arbeitssystem 1 weist eine landwirtschaftliche Arbeitsmaschine 2 zur Bewirtschaftung einer landwirtschaftlichen Fläche 3 und eine Drohne 4 zur Unterstützung der Bewirtschaftung auf.

Die landwirtschaftliche Arbeitsmaschine 2 ist vorzugsweise eine Erntemaschine, wie ein Mähdrescher oder ein Feldhäcksler, oder ein Traktor, kann aber auch jegliche andere zur Bewirtschaftung einer landwirtschaftlichen Fläche 3 eingesetzte Arbeitsmaschine sein.

Die Drohne 4 ist ganz allgemein ein Fluggerät, vorzugsweise allerdings ein autonomes Fluggerät. In diesem Ausführungsbeispiel ist die Drohne 4 als Quadrocopter mit einem Gewicht von weniger als 30 kg ausgeführt.

Beispielsweise zur Versorgung von Rotoren 5 weist die Drohne 4 eine aufladbare Batterie 6 auf. Zum Laden der Batterie 6 weist die landwirtschaftliche Arbeitsmaschine 2 wiederum eine Ladestation 7 auf.

Vorschlagsgemäß weist nun die Ladestation 7 einen Laser-Emitter 8, der Energie über einen Laser-Strahl 9 in einen Wirkbereich 10 abgeben kann, auf. Zusätzlich weist die Drohne 4 einen mit der Batterie 6 elektrisch gekoppelten Laser-Receiver 11, der Energie von dem Laser-Strahl 9 aufnehmen und in die Batterie 6 einspeisen kann, auf. Damit wird es nun ermöglicht, dass die Drohne 4 im Flug im Wirkbereich 10 über den Laser-Strahl 9 von der Ladestation 7 mit Energie zum Laden der Batterie 6 versorgt wird.

Der Wirkbereich 10 ist dabei ganz allgemein jeder dreidimensionale Bereich, in den der Laser-Emitter 8 auf bekannte Art und Weise einen Laser-Strahl 9 abgeben kann. Im Allgemeinen wird der Wirkbereich 10 dabei mit der Entfernung vom Laser-Emitter 8 breiter, da der Laser-Strahl 9 auffächert. Trifft nun im Wirkbereich 10 zumindest ein Teil 9a des Laser-Strahls 9 auf den Laser-Receiver 11, der hier und vorzugsweise als Solarzelle unterhalb der Drohne 4 ausgestaltet ist, so wandelt der Laser-Receiver 11 einen Teil der Energie des Laser-Strahls 9 in elektrische Energie zum Laden der Batterie 6 um.

Der Wirkbereich 10 kann prinzipiell auch ausrichtbar sein. Dies ließe sich zum Beispiel durch ein Schwenken des Laser-Emitters 8 erreichen. Auch eine Ausrichtung in der Längsrichtung des Laser-Strahls 9, zum Beispiel durch Verstellen des Fokus einer Linse, ist denkbar.

Dadurch, dass die Drohne 4 im Flug mit Energie versorgt werden kann, kann sie sich im Prinzip beliebig lang in der Luft halten und wird während des Ladens der Batterie 6 auch nicht von Stößen oder Vibrationen der landwirtschaftlichen Arbeitsmaschine 2 beeinflusst.

Die vom Laser-Emitter 8 abgegebene Energie stammt ganz allgemein von der landwirtschaftlichen Arbeitsmaschine 2, zum Beispiel von einer Starterbatterie 12. Diese wird hier wiederum von einem Verbrennungsmotor der landwirtschaftlichen Arbeitsmaschine 2 gespeist.

Das landwirtschaftliche Arbeitssystem 1 weist hier und vorzugsweise eine Steuereinrichtung 13 auf. Diese kann aus einer oder mehreren logischen und/oder physischen Einheiten bestehen. Hier weist die Steuereinrichtung 13 eine Drohnen-Steuereinheit 14a auf, die der Drohne 4 zugeordnet ist, und/oder eine Arbeitsmaschinen-Steuereinheit 14b, die der landwirtschaftlichen Arbeitsmaschine 2 zugeordnet ist. Vorzugsweise ist nun eine der Steuereinheiten 14a, 14b dazu eingerichtet, den Ladezustand der Batterie 6 zu überwachen. Insbesondere wenn die Steuereinheiten 14a, 14b als physisch getrennte Einheiten, beispielsweise Mikroprozessoren, ausgestaltet sind, ist es vorzugsweise so, dass die Drohnen-Steuereinheit 14a den Ladezustand der Batterie 6 überwacht.

Im Ausführungsbeispiel kommunizieren die beiden Steuereinheiten 14a, 14b drahtlos, zum Beispiel über Bluetooth, WLAN und/oder Lichtimpulse. Die Arbeitsmaschinen-Steuereinheit 14b dient als Basisstation, während die Drohnen-Steuereinheit 14a energiesparend und nur mit den nötigen Funktionen, insbesondere zum autonomen Flugbetrieb der Drohne 4, ausgestattet ist.

Da die Drohne 4 zum Laden der Batterie 6 mittels des Laser-Strahls 9 im Wirkbereich 10 positioniert sein muss, können zwei Fälle unterschieden werden, die im Folgenden dargestellt werden. Für beide Fälle ist eine Ladesequenz definiert. Vorzugsweise ist die Steuereinrichtung 13 dazu eingerichtet, beide Ladesequenzen durchzuführen. Es kann jedoch auch vorgesehen sein, dass nur eine der genannten Ladesequenzen durchgeführt werden kann.

Die Steuereinrichtung 13 ist dazu eingerichtet, in einem Fall, in dem die Drohne 4 außerhalb des Wirkbereichs 10 positioniert ist, eine erste Ladesequenz durchzuführen. Diese kann auch die einzige ausführbare Ladesequenz sein. Die erste Ladesequenz umfasst mehrere Arbeitsschritte.

Generell ist es bei der ersten Ladesequenz notwendig, die Drohne 4 und den Wirkbereich 10 in Abstimmung zu bringen. Daher umfasst die erste Ladesequenz den Arbeitsschritt
- Positionieren der Drohne 4 in einem im Wirkbereich 10 gelegenen Ladebereich 15 relativ zu und beabstandet von der landwirtschaftlichen Arbeitsmaschine 2 oder den Arbeitsschritt
- Positionieren der Drohne 4 in einem Ladebereich 15 relativ zu und beabstandet von der landwirtschaftlichen Arbeitsmaschine 2 und Ausrichten des Wirkbereichs 10 auf den Ladebereich 15 und/oder die Drohne 4.'

Der Ladebereich 15 ist dabei ganz allgemein ein Bereich, der relativ zu der landwirtschaftlichen Arbeitsmaschine 2 definiert ist und sich in einer gewissen Höhe über dem Boden befindet, in dem die Drohne 4 weiterhin die landwirtschaftliche Arbeitsmaschine 2 bei der Bewirtschaftung unterstützen kann.

Da die Drohne 4 in einem Ladevorgang eine gewisse Menge an Energie aufnehmen soll, umfasst die erste Ladesequenz zusätzlich den Arbeitsschritt
- Halten der Drohne 4 im Ladebereich 15,
wobei die Drohne 4 nicht in einer festen Position in dem Ladebereich 15 gehalten werden muss. Zum Beispiel kann die Drohne 4 über der landwirtschaftlichen Arbeitsmaschine 2 kreisen und der Wirkbereich 10 nachgeführt werden.

Das eigentliche Laden schließlich geschieht in mindestens zwei weiteren Arbeitsschritten der ersten Ladesequenz, nämlich den Arbeitsschritten
- Übertragen von Energie mittels des Laser-Strahls 9 von dem Laser-Emitter 8 zu dem Laser-Receiver 11 und
- Laden der Batterie 6.

Es ist durchaus möglich, dass die erste Ladesequenz zum Laden der Drohne 4 mehrfach ausgeführt wird, zum Beispiel wenn die Drohne 4 den Ladebereich 15 verlässt. Dieses Verlassen kann vorgesehen sein, wenn die Drohne 4 beispielsweise eine noch zu definierende Messaufgabe außerhalb des Ladebereichs 15 ausführen soll, oder zufällig, wenn zum Beispiel ein Windstoß die Drohne 4 aus dem Ladebereich 15 trägt, oder eine Bodenwelle die Ausrichtung der landwirtschaftlichen Arbeitsmaschine 2, und somit des Laser-Emitters 8, verändert. Dementsprechend kann die erste Ladesequenz dann neu eingeleitet werden.

Vorzugsweise ist die den Ladezustand der Batterie 6 überwachende Steuereinheit 14a dazu eingerichtet, die erste Ladesequenz einzuleiten, sobald der Ladezustand einen ersten Schwellwert, zum Beispiel 20 % Batterieladung, vorzugsweise 10 % Batterieladung, weiter vorzugsweise 5 % Batterieladung, erreicht oder unterschreitet.

Es kann zusätzlich vorgesehen sein, dass die Arbeitsmaschinen-Steuereinheit 14b dazu eingerichtet ist, in einem Fall, in dem die Drohne 4 im Wirkbereich 10 positioniert ist, eine zweite Ladesequenz durchzuführen, sobald der Ladezustand einen zweiten Schwellwert erreicht oder unterschreitet. Auch die zweite Ladesequenz kann die einzige Ladesequenz sein.

Die zweite Ladesequenz umfasst die Arbeitsschritte
- Aktivieren des Laser-Emitters 8 vor dem Übertragen der Energie,
- Übertragen von Energie mittels des Laser-Strahls 9 von dem Laser-Emitter 8 zu dem Laser-Receiver 11,
- Laden der Batterie 6 und
- Deaktivieren des Laser-Emitters 8 nach dem Übertragen der Energie.

Da sich die Drohne 4 bereits im Wirkbereich 10 befindet, kann auf ein Positionieren der Drohne 4 verzichtet werden. Alternativ ist auch denkbar, dass die Drohne 4 auch in der zweiten Ladesequenz im Ladebereich 15 positioniert wird, und/oder, dass der Wirkbereich 10 ausgerichtet wird, zum Beispiel so, dass sich der Laser-Receiver 11 in einem Teil des Wirkbereichs 10 befindet, in dem die Energieübertragung besonders effizient ist.

Die Begriffe "Aktivieren" und "Deaktivieren" beziehen sich dabei auf das Aussenden des Laser-Strahls 9, das heißt, im deaktivierten Zustand sendet der Laser-Emitter 8 keinen Laser-Strahl 9 aus. Dadurch, dass der Laser-Emitter 8 nicht aktiviert ist, wenn keine Energie übertragen werden soll, lässt sich Energie der landwirtschaftlichen Arbeitsmaschine 2 einsparen. Vorzugsweise werden die Arbeitsschritte des Aktivierens und des Deaktivierens des Laser-Emitters 8 vor bzw. nach dem Übertragen der Energie daher auch in der ersten Ladesequenz durchgeführt.

Der erste und der zweite Schwellwert können zwar voneinander unabhängig sein, vorzugsweise ist jedoch der erste Schwellwert größer als der zweite Schwellwert, da die Drohne 4 bei der ersten Ladesequenz gegebenenfalls erst in den Ladebereich 15 gebracht werden muss. Beide Schwellwerte können daher zum Beispiel von einer landwirtschaftlichen Anwendung oder von der Entfernung der Drohne 4 zur landwirtschaftlichen Arbeitsmaschine 2 abhängig sein. Insbesondere beim ersten Schwellwert kann dieser in Abhängigkeit von der Entfernung erhöht werden, sodass die Drohne 4 in den Ladebereich 15 zurückkehren kann, ohne dass die Batterie 6 einen kritischen Ladezustand erreicht, in dem die Drohne 4 nicht mehr ausreichend mit Energie versorgt würde. Sofern nur eine der beiden Ladesequenzen durchführbar ist, muss auch nur ein Schwellwert vorgesehen sein.

Es ist nun besonders bevorzugt so, dass die Steuereinrichtung 13 dazu eingerichtet ist, die Arbeitsschritte der ersten und/oder zweiten Ladesequenz durchzuführen, während sich die Drohne 4 im Flug, zum Beispiel in einer Position 10m über der landwirtschaftlichen Arbeitsmaschine 2, befindet. Vorteilhaft ist die Steuereinrichtung 13, insbesondere auch, dazu eingerichtet, die Arbeitsschritte der ersten und/oder zweiten Ladesequenz durchzuführen, während die landwirtschaftliche Arbeitsmaschine 2 eine Fahrbewegung, vorzugsweise auf der landwirtschaftlichen Fläche 3, ausführt und/oder während die landwirtschaftliche Arbeitsmaschine 2 Arbeitsschritte einer Bewirtschaftung ausführt, vorzugsweise während jeglicher von der landwirtschaftlichen Arbeitsmaschine 2 ausführbaren Arbeitsschritte einer Bewirtschaftung.

Besonders vorteilhaft ist es, wenn die Steuereinrichtung 13 dazu eingerichtet ist, die Arbeitsschritte der ersten und/oder zweiten Ladesequenz während der gesamten Bewirtschaftung der landwirtschaftlichen Fläche 3, und, vorzugsweise, auch während der Anfahrt und/oder Rückfahrt von bzw. zu einem Ausgangspunkt, durchzuführen. Die Arbeitsschritte der Bewirtschaftung können bekanntermaßen zum Beispiel ein Abernten eines Feldes, ein Drehen in einem Vorgewende oder ein Pflügen des Bodens umfassen.

Zur Unterstützung der Bewirtschaftung kann die Drohne 4 ein mindestens einen Sensor 16 aufweisendes Sensormodul 17 zur Erfassung von Messdaten aufweisen. Die Drohne 4 ist dann dazu eingerichtet, eine Messaufgabe mittels des Sensormoduls 17 im Flug durchzuführen. Vorzugsweise ist außerdem die Drohne 4 oder das Sensormodul 17 dazu eingerichtet, zur Durchführung der Messaufgabe mit der landwirtschaftlichen Arbeitsmaschine 2 zu kooperieren.

Eine Kooperation zwischen der Drohne 4 und der landwirtschaftlichen Arbeitsmaschine 2 läuft dann beispielsweise so ab, dass die Drohne 4 mittels des Sensormoduls 17 die Messaufgabe durchführt, während die landwirtschaftliche Arbeitsmaschine 2 mittels eigener Sensorik eine eigene Messaufgabe durchführt. Die Ergebnisse beider Messaufgaben werden dann kombiniert und können so zum Beispiel bei der Bewirtschaftung der landwirtschaftlichen Fläche 3 genutzt werden, um die Effizienz der landwirtschaftlichen Arbeitsmaschine 2 zu erhöhen.

Das Sensormodul 17 kann als Sensor 16 vorzugsweise eine Kamera, insbesondere eine Infrarotkamera, einen Radar-Sensor, einen Lidar-Sensor, einen Terra-Hertz-Sensor und/oder einen Ultraschall-Sensor aufweisen. Die genannten Sensoren können aktiv oder passiv ausgestaltet sein. Gerade bei diesen Sensoren 16 ist es besonders vorteilhaft, dass die Drohne 4 durchgehend über der landwirtschaftlichen Arbeitsmaschine 2 fliegen kann. Es wird so ermöglicht, konstant einen Datenstrom aus einem Blickwinkel zu erhalten, den Sensoren auf der landwirtschaftlichen Arbeitsmaschine nur konstruktiv aufwendig erreichen könnten.

Vor allem bei der hier kabellos und autonom ausgestalteten Drohne 4 ist es so, dass die Messaufgabe das Erfassen von Messdaten zur Erstellung einer Feldkarte der landwirtschaftlichen Fläche 3 umfasst. Eine Feldkarte ist hier eine Menge an Informationen über den Pflanzenbestand 18 oder andere wichtige Parameter wie Hindernisse der landwirtschaftlichen Fläche 3, die ortskodiert ist.

Es ist dementsprechend so, dass für die Feldkarte vorzugsweise Messdaten zur Erkennung von kranken und/oder verunkrauteten Pflanzenbeständen 18 pro Fläche erfasst werden, und/oder, dass Messdaten zur Bestimmung der Bestandsmasse pro Fläche erfasst werden, und/oder, dass Messdaten zur Bestimmung der Bestandsqualität pro Fläche erfasst werden, und/oder, dass Messdaten zur Ertragsprognose pro Fläche erfasst werden, und/oder, dass Messdaten zur Bestimmung der Abreife der Feldfrüchte erfasst werden. Diese können beispielsweise Farbwerte einer Farbkamera oder Temperaturwerte einer Infrarotkamera sein.

Die Feldkarte wird hier genutzt, um die Bewirtschaftung zu planen, indem eine abzufahrende Strecke über der landwirtschaftlichen Fläche 3 und Einstellungen von Arbeitsaggregaten 19 der landwirtschaftlichen Arbeitsmaschine 2 an verschiedenen Punkten der Strecke so optimiert werden, dass ein möglichst hoher wirtschaftlicher Ertrag bei der Ernte erreicht wird.

Weiterhin ist es vorzugsweise so, dass die Messaufgabe das Erfassen von Messdaten zur Umfelderkennung, insbesondere zur Vorfelderkennung vor der landwirtschaftlichen Arbeitsmaschine 2 und/oder Rückschauerkennung hinter der landwirtschaftlichen Arbeitsmaschine 2, umfasst, womit das Handling der landwirtschaftlichen Arbeitsmaschine 2 im oder außerhalb des Pflanzenbestands 18 verbessert wird.

Weiterhin kann die Messaufgabe das Erfassen von Messdaten zur Übergabe von Erntegut von der landwirtschaftlichen Arbeitsmaschine 2 an eine andere landwirtschaftliche Arbeitsmaschine umfassen. Fährt neben einer Erntemaschine ein Abfuhrwagen und wird an diesen zum Beispiel abgeernteter Mais übergeben, soll der Mais möglichst gleichmäßig auf den Abfuhrwagen verteilt werden. Ein genaues Bild der Situation kann von der Drohne 4 aus gut erfasst werden.

Gerade unter Sicherheitsaspekten umfasst die Messaufgabe vorzugsweise auch das Erfassen von Messdaten zur Wildtiererkennung und/oder das Erfassen von Messdaten zur Hinderniserkennung und/oder das Erfassen von Messdaten zur Lokalisation von nichtmagnetisierbaren Metallen.

Rehe zum Beispiel verstecken sich bei Annäherung einer Erntemaschine häufig im Pflanzenbestand 18. Hier kann die Drohne 4 diese aus der Entfernung aufspüren und so retten. Aber auch Gegenstände, die den Arbeitsaggregaten 19 der landwirtschaftlichen Arbeitsmaschine 2 Schaden zufügen könnten, sollen möglichst frühzeitig erkannt und beseitigt werden. Diese Beispiele zeigen, dass die Betriebssicherheit des landwirtschaftlichen Arbeitssystems 1 bedeutend erhöht werden kann, wenn während der Bewirtschaftung durchgehend auf Messdaten der Drohne 4 zurückgegriffen werden kann, da diese nicht regelmäßig zum Wechseln der Batterie 6 landen muss.

Hier und vorzugsweise ist es weiterhin so, dass die Steuereinrichtung 13 eine Auswerteeinheit 20 aufweist, die dazu eingerichtet ist, die erfassten Messdaten zu Sensorinformationen zu verarbeiten. Vorzugsweise ist die Steuereinrichtung 13 dazu eingerichtet, nachfolgende Schritte der Bewirtschaftung in Abhängigkeit von den Sensorinformationen zu planen und/oder durchzuführen.

Die Bewirtschaftung der landwirtschaftlichen Fläche 3 kann dann so ablaufen, dass in einem ersten Schritt, beispielsweise bereits während der Anfahrt der landwirtschaftlichen Arbeitsmaschine 2 zur landwirtschaftlichen Fläche 3, die Drohne 4 die landwirtschaftliche Fläche 3 überfliegt und eine Feldkarte erstellt.

Gegebenenfalls wird dabei so oft wie nötig die erste Ladesequenz durchgeführt. Anhand der Feldkarte kann dann in einem zweiten Schritt die Bewirtschaftung geplant werden. In einem dritten Schritt beginnt die landwirtschaftliche Arbeitsmaschine 2 mit der Abarbeitung der geplanten Arbeitsschritte der Bewirtschaftung. Währenddessen liefert die Drohne 4 dann vorzugsweise weitere Messdaten, beispielsweise während sie im Wirkbereich 10 über der landwirtschaftlichen Arbeitsmaschine 2 kreist. So kann dann während der Abarbeitung der Arbeitsschritte der Bewirtschaftung durch die landwirtschaftliche Arbeitsmaschine 2 intermittierend die zweite Ladesequenz durchgeführt werden. Gegebenenfalls aktualisiert die Drohne 4 zwischenzeitlich nochmal die Feldkarte und entfernt sich dafür aus dem Wirkbereich 10. Dabei könnte wieder die erste Ladesequenz zum Einsatz kommen.

Hier und vorzugsweise ist die Steuereinrichtung 13 dazu eingerichtet, mindestens einen Betriebsparameter, insbesondere die Fahrgeschwindigkeit, der landwirtschaftlichen Arbeitsmaschine 2 basierend auf den erfassten Messdaten und/oder verarbeiteten Sensorinformationen einzustellen. Insbesondere bei einer Wildtiererkennung und/oder einer Hinderniserkennung kann die Steuereinrichtung 13 dann einen Not-Stopp der landwirtschaftlichen Arbeitsmaschine 2 und/oder der Arbeitsaggregate 19 der landwirtschaftlichen Arbeitsmaschine 2 durchführen.

Es ist dementsprechend hier und vorzugsweise so, dass die Steuereinrichtung 13 dazu eingerichtet ist, die Arbeitsschritte der ersten und/oder der zweiten Ladesequenz durchzuführen, während die Drohne 4 die Messaufgabe durchführt. Dadurch können die Ladesequenzen und die Messaufgabe voneinander unabhängig werden, das heißt im besonders bevorzugten Fall, dass die Messaufgabe anhand des Bedarfs an Messdaten bei der Bewirtschaftung geplant und/oder durchgeführt wird und die Ladesequenzen so ausgeführt werden, dass die Durchführung der Messaufgabe jederzeit unbeeinflusst bleibt.

Nach einer weiteren Lehre, der eigenständige Bedeutung zukommt, wird ein Verfahren zum Betrieb eines vorschlagsgemäßen landwirtschaftlichen Arbeitssystems 1 beansprucht. Dabei ist es nun vorschlagsgemäß so, dass der Laser-Emitter 8 Energie über einen Laser-Strahl 9 abgibt, dass der Laser-Receiver 11 Energie von dem Laser-Strahl 9 aufnimmt und in die Batterie 6 einspeist und dass die Drohne 4 im Flug über den Laser-Strahl 9 von der Ladestation 7 mit Energie zum Laden der Batterie 6 versorgt wird. Auf alle obigen Ausführungen zum vorschlagsgemäßen landwirtschaftlichen Arbeitssystem 1 darf bezüglich des Verfahrens verwiesen werden.

### Bezugszeichenliste

- 1: Landwirtschaftliches Arbeitssystem
- 2: Landwirtschaftliche Arbeitsmaschine
- 3: Landwirtschaftliche Fläche
- 4: Drohne
- 5: Rotoren
- 6: Batterie
- 7: Ladestation
- 8: Laser-Emitter
- 9: Laser-Strahl
- 9a: Teil des Laser-Strahls
- 10: Wirkbereich
- 11: Laser-Receiver
- 12: Starterbatterie
- 13: Steuereinrichtung
- 14a: Drohnen-Steuereinheit
- 14b: Arbeitsmaschinen-Steuereinheit
- 15: Ladebereich
- 16: Sensor
- 17: Sensormodul
- 18: Pflanzenbestand
- 19: Arbeitsaggregat
- 20: Auswerteeinheit

## Patentansprüche

1. Landwirtschaftliches Arbeitssystem mit einer landwirtschaftlichen Arbeitsmaschine (2), insbesondere einer Erntemaschine, zur Bewirtschaftung einer landwirtschaftlichen Fläche (3) und mit einer Drohne (4) zur Unterstützung der Bewirtschaftung, wobei die Drohne (4) eine aufladbare Batterie (6) aufweist und wobei die landwirtschaftliche Arbeitsmaschine (2) eine Ladestation (7) zum Laden der Batterie (6) aufweist,
**dadurch gekennzeichnet,**
**dass** die Ladestation (7) einen Laser-Emitter (8), der Energie über einen Laser-Strahl (9) in einen Wirkbereich (10) abgeben kann, aufweist, dass die Drohne (4) einen mit der Batterie (6) elektrisch gekoppelten Laser-Receiver (11), der Energie von dem Laser-Strahl (9) aufnehmen und in die Batterie (6) einspeisen kann, aufweist und dass die Drohne (4) im Flug im Wirkbereich (10) über den Laser-Strahl (9) von der Ladestation (7) mit Energie zum Laden der Batterie (6) versorgt werden kann, wobei
das landwirtschaftliche Arbeitssystem (1) eine Steuereinrichtung (13) aufweist, dass die Steuereinrichtung (13) eine Drohnen-Steuereinheit (14a) aufweist, die der Drohne (4) zugeordnet ist, und/oder, dass die Steuereinrichtung (13) eine Arbeitsmaschinen-Steuereinheit (14b) aufweist, die der landwirtschaftlichen Arbeitsmaschine (2) zugeordnet ist, wobei eine der Steuereinheiten (14a, 14b) dazu eingerichtet ist, den Ladezustand der Batterie (6) zu überwachen, wobei
die Steuereinrichtung (13) dazu eingerichtet ist, in einem Fall, in dem die Drohne (4) außerhalb des Wirkbereichs (10) positioniert ist, eine erste Ladesequenz durchzuführen umfassend die Arbeitsschritte
- Positionieren der Drohne (4) in einem im Wirkbereich (10) gelegenen Ladebereich (15) relativ zu und beabstandet von der landwirtschaftlichen Arbeitsmaschine (2) oder
- Positionieren der Drohne (4) in einem Ladebereich (15) relativ zu und beabstandet von der landwirtschaftlichen Arbeitsmaschine (2) und Ausrichten des Wirkbereichs (10) auf den Ladebereich (15) und/oder die Drohne (4),
- Halten der Drohne (4) im Ladebereich (15),
- Übertragen von Energie mittels des Laser-Strahls (9) von dem Laser-Emitter (8) zu dem Laser-Receiver (11) und
- Laden der Batterie (6),
vorzugsweise, dass die den Ladezustand der Batterie (6) überwachende Steuereinheit (14a, 14b) dazu eingerichtet ist, die erste Ladesequenz einzuleiten, sobald der Ladezustand einen ersten Schwellwert erreicht oder unterschreitet.

2. Landwirtschaftliches Arbeitssystem nach Anspruch 1, **dadurch gekennzeichnet, dass** die Arbeitsmaschinen-Steuereinheit (14b) dazu eingerichtet ist, in einem Fall, in dem die Drohne (4) im Wirkbereich (10) positioniert ist, eine zweite Ladesequenz durchzuführen, sobald der Ladezustand einen zweiten Schwellwert erreicht oder unterschreitet, umfassend die Arbeitsschritte
- Aktivieren des Laser-Emitters (8) vor dem Übertragen der Energie,
- Übertragen von Energie mittels des Laser-Strahls (9) von dem Laser-Emitter (8) zu dem Laser-Receiver (11),
- Laden der Batterie (6) und
- Deaktivieren des Laser-Emitters (8) nach dem Übertragen der Energie.

3. Landwirtschaftliches Arbeitssystem nach Anspruch 1 oder 2, **dadurch gekennzeichnet, dass** die Steuereinrichtung (13) dazu eingerichtet ist, die Arbeitsschritte der ersten und/oder zweiten Ladesequenz durchzuführen,
- während sich die Drohne (4) im Flug befindet und/oder
- während die landwirtschaftliche Arbeitsmaschine (2) eine Fahrbewegung ausführt und/oder
- während die landwirtschaftliche Arbeitsmaschine (2) Arbeitsschritte einer Bewirtschaftung ausführt, vorzugsweise während jeglicher von der landwirtschaftlichen Arbeitsmaschine (2) ausführbaren Arbeitsschritte einer Bewirtschaftung.

4. Landwirtschaftliches Arbeitssystem nach einem der vorhergehenden Ansprüche, **dadurch gekennzeichnet, dass** die Drohne (4) ein mindestens einen Sensor (16) aufweisendes Sensormodul (17) zur Erfassung von Messdaten aufweist, dass die Drohne (4) dazu eingerichtet ist, eine Messaufgabe mittels des Sensormoduls (17) im Flug durchzuführen, vorzugsweise, dass die Drohne (4) oder das Sensormodul (17) dazu eingerichtet ist, zur Durchführung der Messaufgabe mit der landwirtschaftlichen Arbeitsmaschine (2) zu kooperieren.

5. Landwirtschaftliches Arbeitssystem nach Anspruch 4, **dadurch gekennzeichnet, dass** das Sensormodul (17) als Sensor (16) eine Kamera, insbesondere eine Infrarotkamera, einen Radar-Sensor, einen Lidar-Sensor, einen Terra-Hertz-Sensor und/oder einen Ultraschall-Sensor aufweist.

6. Landwirtschaftliches Arbeitssystem nach Anspruch 4 oder 5, **dadurch gekennzeichnet, dass** die Messaufgabe das Erfassen von Messdaten zur Erstellung einer Feldkarte der landwirtschaftlichen Fläche (3) umfasst, vorzugsweise,
- dass Messdaten zur Erkennung von kranken und/oder verunkrauteten Pflanzenbeständen (18) pro Fläche erfasst werden, und/oder,
- dass Messdaten zur Bestimmung der Bestandsmasse pro Fläche erfasst werden, und/oder,
- dass Messdaten zur Bestimmung der Bestandsqualität pro Fläche erfasst werden, und/oder,
- dass Messdaten zur Ertragsprognose pro Fläche erfasst werden, und/oder,
- dass Messdaten zur Bestimmung der Abreife der Feldfrüchte erfasst werden.

7. Landwirtschaftliches Arbeitssystem nach einem der Ansprüche 4 bis 6, **dadurch gekennzeichnet, dass** die Messaufgabe umfasst
- das Erfassen von Messdaten zur Umfelderkennung, insbesondere zur Vorfelderkennung vor der landwirtschaftlichen Arbeitsmaschine (2) und/oder Rückschauerkennung hinter der landwirtschaftlichen Arbeitsmaschine (2) und/oder
- das Erfassen von Messdaten zur Übergabe von Erntegut von der landwirtschaftlichen Arbeitsmaschine (2) an eine andere landwirtschaftliche Arbeitsmaschine und/oder
- das Erfassen von Messdaten zur Wildtiererkennung und/oder
- das Erfassen von Messdaten zur Hinderniserkennung und/oder
- das Erfassen von Messdaten zur Lokalisation von nicht-magnetisierbaren Metallen.

8. Landwirtschaftliches Arbeitssystem nach einem der Ansprüche 4 bis 7, **dadurch gekennzeichnet, dass** die Steuereinrichtung (13) eine Auswerteeinheit (20) aufweist, die dazu eingerichtet ist, die erfassten Messdaten zu Sensorinformationen zu verarbeiten, vorzugsweise, dass die Steuereinrichtung (13) dazu eingerichtet ist, nachfolgende Arbeitsschritte der Bewirtschaftung in Abhängigkeit von den Sensorinformationen zu planen und/oder durchzuführen.

9. Landwirtschaftliches Arbeitssystem nach einem der Ansprüche 4 bis 8, **dadurch gekennzeichnet, dass** die Steuereinrichtung (13) dazu eingerichtet ist, die Arbeitsschritte der ersten und/oder der zweiten Ladesequenz durchzuführen, während die Drohne (4) die Messaufgabe durchführt.

10. Verfahren zum Betrieb eines landwirtschaftlichen Arbeitssystems nach einem der vorhergehenden Ansprüche, **dadurch gekennzeichnet, dass** der Laser-Emitter (8) Energie über einen Laser-Strahl (9) abgibt, dass der Laser-Receiver (11) Energie von dem Laser-Strahl (9) aufnimmt und in die Batterie (6) einspeist und dass die Drohne (4) im Flug über den Laser-Strahl (9) von der Ladestation (7) mit Energie zum Laden der Batterie (6) versorgt wird.

## Claims

1. An agricultural operational system with an agricultural working machine (2), in particular a harvesting machine, for cultivating an agricultural area (3) and with a drone (4) for supporting the cultivation, wherein the drone (4) has a rechargeable battery (6) and wherein the agricultural working machine (2) has a charging station (7) for charging the battery (6),
**characterized in that**
the charging station (7) has a laser emitter (8) which can deliver energy into an operational zone (10) via a laser beam (9), **in that** the drone (4) has a laser receiver (11) which is electrically coupled to the battery (6) and which can receive energy from the laser beam (9) and store it in the battery (6), and **in that** in the operational zone (10), the drone (4) can be supplied with energy in flight from the charging station (7) via the laser beam (9) in order to charge the battery (8), wherein
the agricultural operational system (1) has a control device (13), **in that** the control device (13) has a drone control unit (14a) which is associated with the drone (4), and **in that** the control device (13) has a working machine control unit (14b) which is associated with the agricultural working machine (2), wherein one of the control units (14a, 14b) is configured to monitor the state of charge of the battery (6), wherein
in a case in which the drone (4) is positioned outside the operational zone (10), the control device (13) is configured to carry out a first charging sequence comprising the operating steps of:
- positioning the drone (4) in a charging zone (15) situated in the operational zone (10) relative to and at a distance from the agricultural working machine (2), or
- positioning the drone (4) in a charging zone (15) relative to and at a distance from the agricultural working machine (2) and aligning the operational zone (10) on the charging zone (15) and/or the drone (4),
- holding the drone (4) in the charging zone (15),
- transferring energy from the laser emitter (8) to the laser receiver (11) by means of the laser beam (9), and
- charging the battery (6),
preferably **in that** the control unit (14a, 14b) monitoring the state of charge of the battery (6) is configured to initiate the first charging sequence as soon as the state of charge reaches or falls below a first threshold.

2. The agricultural operational system according to claim 1, **characterized in that** in a case in which the drone (4) is positioned in the operational zone (10), the working machine control unit (14b) is configured to carry out a second charging sequence as soon as the charging state reaches or falls below a second threshold, comprising the operating steps of
- activating the laser emitter (8) before transmitting the energy,
- transferring energy from the laser emitter (8) to the laser receiver (11) by means of the laser beam (9),
- charging the battery (6), and
- deactivating the laser emitter (8) after transferring the energy.

3. The agricultural operational system according to claim 1 or claim 2, **characterized in that** the control device (13) is configured to carry out the operating steps of the first and/or second charging sequence
- while the drone (4) is in flight, and/or
- while the agricultural working machine (2) carries out a travelling movement, and/or
- while the agricultural working machine (2) carries out operating steps of a cultivation, preferably during each of the operating steps of a cultivation which can be carried out by the agricultural working machine (2).

4. The agricultural operational system according to one of the preceding claims, **characterized in that** the drone (4) has a sensor module (17) having at least one sensor (16) for acquiring measurement data, **in that** the drone (4) is configured to carry out a measurement task by means of the sensor module (17) in flight, preferably **in that** the drone (4) or the sensor module (17) is configured to cooperate with the agricultural working machine (2) in order to carry out the measurement task.

5. The agricultural operational system according to claim 4, **characterized in that** the sensor module (17) has a camera, in particular an infrared camera, a radar sensor, a lidar sensor, a terahertz sensor and/or an ultrasonic sensor as the sensor (16).

6. The agricultural operational system according to claim 4 or claim 5, **characterized in that** the measurement task comprises acquiring measurement data for the generation of a field map of the agricultural area (3), preferably
- **in that** measurement data for sensing unhealthy and/or weedovergrown plant stock (18) per unit area are acquired, and/or
- **in that** measurement data for determining the mass per unit area of the field crop are acquired, and/or
- **in that** measurement data for determining the quality of the field crop per unit area are acquired, and/or
- **in that** measurement data for forecasting the yield per unit area are acquired, and/or
- **in that** measurement data for determining the ripening of the agricultural crop are detected.

7. The agricultural operational system according to one of claims 4 to 6, **characterized in that** the measurement task comprises
- acquiring measurement data for environmental sensing, in particular for frontal area sensing in front of the agricultural working machine (2) and/or for rear view sensing behind the agricultural working machine (2), and/or
- acquiring measurement data for transferring harvested material from the agricultural working machine (2) to another agricultural working machine, and/or
- acquiring measurement data for sensing wild animals, and/or
- acquiring measurement data for sensing obstacles, and/or
- acquiring measurement data for the localisation of non-magnetisable metals.

8. The agricultural operational system according to one of claims 4 to 7, **characterized in that** the control device (13) has an evaluation unit (20) which is configured to process the acquired measurement data into sensor information, preferably **in that** the control device (13) is configured to plan and/or carry out subsequent operating steps of the cultivation as a function of the sensor information.

9. The agricultural operational system according to one of claims 4 to 8, **characterized in that** the control device (13) is configured to carry out the operating steps of the first and/or the second charging sequence while the drone (4) carries out the measurement task.

10. A method for operating an agricultural operational system according to one of the preceding claims, **characterized in that** the laser emitter (8) delivers energy via a laser beam (9), **in that** the laser receiver (11) receives energy from the laser beam (9) and stores it in the battery (6) and **in that** the drone (4) is supplied with energy in flight via the laser beam (9) from the charging station (7) in order to charge the battery (6).

## Revendications

1. Système de travail agricole comprenant une machine de travail agricole (2), en particulier une machine de récolte, destinée à l'exploitation d'une surface agricole (3), et comprenant un drone (4) destiné à fournir une assistance d'exploitation, le drone (4) présentant une batterie rechargeable (6), et la machine agricole (2) présentant une station de recharge (7) pour charger la batterie (6),
**caractérisé en ce que**
la station de recharge (7) présente un émetteur laser (8) qui peut émettre de l'énergie dans une zone d'action (10), par l'intermédiaire d'un faisceau laser (9), **en ce que** le drone (4) présente un récepteur laser (11) qui est couplé électriquement à la batterie (6) et peut recevoir de l'énergie du faisceau laser (9) et l'injecter dans la batterie (6), et **en ce que** le drone (4) peut être alimenté en énergie par la station de recharge (7), par l'intermédiaire du faisceau laser (9), au cours du vol, dans la zone d'action (10), aux fins de charger la batterie (6), sachant que
le système de travail agricole (1) présente un dispositif de commande (13), que le dispositif de commande (13) comporte une unité de commande de drone (14a) qui est associée au drone (4), et que le dispositif de commande (13) présente une unité de commande de machine de travail (14b) qui est associée à la machine de travail agricole (2), l'une des unités de commande (14a, 14b) étant conçue pour surveiller l'état de charge de la batterie (6), sachant que
le dispositif de commande (13) est conçu pour réaliser, dans un cas où le drone (4) est positionné à l'extérieur de la zone d'action (10), une première séquence de chargement qui comprend les étapes de travail suivantes :
- positionnement du drone (4) dans une zone de chargement (15) située dans la zone d'action (10), par rapport à la machine de travail agricole (2) et à distance de celle-ci, ou
- positionnement du drone (4) dans une zone de chargement (15), par rapport à la machine de travail agricole (2) et à distance de celle-ci, et orientation de la zone d'action (10) vers la zone de chargement (15) et/ou le drone (4),
- maintien du drone (4) dans la zone de chargement (15),
- transmission d'énergie au moyen du faisceau laser (9), depuis l'émetteur laser (8) vers le récepteur laser (11), et
- chargement de la batterie (6),
de préférence que l'unité de commande (14a, 14b) surveillant l'état de charge de la batterie (6) est conçue pour lancer la première séquence de chargement, dès que l'état de charge a atteint une première valeur seuil ou passe en dessous de celle-ci.

2. Système de travail agricole selon la revendication 1, **caractérisé en ce que** l'unité de commande de machine de travail (14b) est conçue pour réaliser, dans un cas où le drone (4) est positionné dans la zone d'action (10), une deuxième séquence de chargement, dès que l'état de charge a atteint une deuxième valeur seuil ou passe en dessous de celle-ci, comprenant les étapes de travail suivantes :
- activation de l'émetteur laser (8) avant la transmission de l'énergie,
- transmission d'énergie au moyen du faisceau laser (9), depuis l'émetteur laser (8) vers le récepteur laser (11),
- chargement de la batterie (6), et
- désactivation de l'émetteur laser (8) après la transmission de l'énergie.

3. Système de travail agricole selon la revendication 1 ou 2, **caractérisé en ce que** le dispositif de commande (13) est conçu pour exécuter les étapes de travail de la première et/ou de la deuxième séquence de chargement,
- pendant que le drone (4) est en vol et/ou
- pendant que la machine de travail agricole (2) exécute un mouvement de déplacement, et/ou
- pendant que la machine de travail agricole (2) exécute des étapes de travail d'une exploitation, de préférence pendant toute étape de travail d'une exploitation pouvant être réalisée par la machine de travail agricole (2).

4. Système de travail agricole selon une des revendications précédentes, **caractérisé en ce que** le drone (4) comprend un module de capteur (17) qui présente au moins un capteur (16) et est destiné à recueillir des données de mesure, **en ce que** le drone (4) est conçu pour exécuter en vol une tâche de mesure à l'aide du module de capteur (17), de préférence que le drone (4) ou le module de capteur (17) est conçu pour coopérer avec la machine de travail agricole (2) en vue de réaliser la tâche de mesure.

5. Système de travail agricole selon la revendication 4, **caractérisé en ce que** le module de capteur (17) présente, en tant que capteur (16), une caméra, en particulier une caméra infrarouge, un capteur radar, un capteur LiDAR, un capteur térahertz et/ou un capteur à ultrasons.

6. Système de travail agricole selon la revendication 4 ou 5, **caractérisé en ce que** la tâche de mesure comprend la collecte de données de mesure en vue d'établir une carte de champ de la surface agricole (3), de préférence
- **en ce que** des données de mesure sont collectées pour identifier des cultures (18) malades et/ou envahies par les mauvaises herbes, et/ou
- **en ce que** des données de mesure sont collectées pour déterminer la masse des cultures par surface, et/ou
- **en ce que** des données de mesure sont collectées pour déterminer la qualité des cultures par surface, et/ou
- **en ce que** des données de mesure sont collectées en vue d'un pronostic de rendement par surface, et/ou
- **en ce que** des données de mesure sont collectées pour déterminer le degré de maturité complète des cultures du champ.

7. Système de travail agricole selon une des revendications 4 à 6, **caractérisé en ce que** la tâche de mesure comprend :
- la collecte de données de mesure aux fins d'identification de l'environnement, notamment d'identification d'approche du champ situé devant la machine de travail agricole (2), et/ou d'identification de la zone arrière située derrière la machine de travail agricole (2), et/ou
- la collecte de données de mesure aux fins de transfert de produits récoltés, depuis la machine de travail agricole (2) vers une autre machine de travail agricole, et/ou
- la collecte de données de mesure aux fins d'identification d'animaux sauvages, et/ou
- la collecte de données de mesure aux fins d'identification d'obstacles, et/ou
- la collecte de données de mesure aux fins de localisation de métaux non magnétisables,

8. Système de travail agricole selon une des revendications 4 à 7, **caractérisé en ce que** le dispositif de commande (13) présente une unité d'évaluation (20) qui est conçue pour transformer en informations de capteur les données de mesure collectées, de préférence **en ce que** le dispositif de commande (13) est conçu pour planifier et/ou exécuter des étapes de travail ultérieures de l'exploitation, en fonction des informations de capteur.

9. Système de travail agricole selon une des revendications 4 à 8, **caractérisé en ce que** le dispositif de commande (13) est conçu pour exécuter les étapes de travail de la première et/ou de la deuxième séquence de chargement, pendant que le drone (4) exécute la tâche de mesure.

10. Procédé pour faire fonctionner un système de travail agricole selon une des revendications précédentes, **caractérisé en ce que** l'émetteur laser (8) délivre de l'énergie par l'intermédiaire d'un faisceau laser (9), **en ce que** le récepteur laser (11) reçoit de l'énergie du faisceau laser (9) et l'injecte dans la batterie (6), et **en ce que**, en vol, le drone (4) est alimenté en énergie par la station de recharge (7), par l'intermédiaire du faisceau laser (9), aux fins de charger la batterie (6),
